# FASCICULE DE BREVET EUROPEEN

(11) **EP 3 816 474 B1**
(45) Date de publication et mention de la délivrance du brevet: **03.07.2024**
(21) Numéro de dépôt: 20204719.7
(22) Date de dépôt: 29.10.2020
(51) Int. Cl.: F16F 15/027, E04H 9/02, F16F 9/20, F16F 9/48

(54) **DISPOSITIF DE DISSIPATION HYDRAULIQUE POUR OUVRAGE D'ART**
VORRICHTUNG ZUR HYDRAULISCHEN ABLEITUNG FÜR EIN KUNSTBAUWERK
HYDRAULIC DISSIPATION DEVICE FOR ENGINEERING STRUCTURE

(30) Priorité: 30.10.2019 FR 1912171
(43) Date de publication de la demande: 05.05.2021
(73) Titulaire: Soletanche Freyssinet, 92500 Rueil Malmaison (FR)
(72) Inventeur: GROULT, Antonin, 78740 Vaux sur Seine (FR); GALBIATI, Claudio, 21042 Caronno Pertusella (Varese) (IT); SARTORI, Mauro, 20090 Vimodrone (MI) (IT)
(74) Mandataire: Cabinet Nony

(56) Documents cités:
- JP-A- 2005 140 142
- JP-A- 2016 148 449
- JP-B2- 4 389 475

## Description

### Domaine technique

La présente invention concerne le domaine des dispositifs de dissipation hydrauliques, et en particulier mais non exclusivement les dispositifs parasismiques.

### Technique antérieure

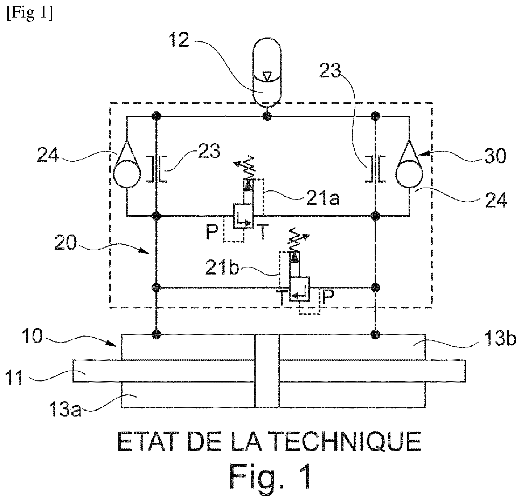

On a illustré à la figure 1 un dispositif de dissipation hydraulique connu, comportant :
- Un vérin 10 à tige 11 traversante, utilisé pour convertir l'énergie mécanique d'un déplacement sous séisme (Effort, Vitesse) en énergie hydraulique (Débit, Pression),
- un accumulateur oléopneumatique 12 permettant d'absorber la variation de volume d'huile provoquée par la dissipation de l'énergie hydraulique,
- un circuit 20 de dissipation contrôlée de l'énergie hydraulique en cas d'épisode sismique, au travers de vannes de limitation de pression 21a et 21b qui ne s'ouvrent que si la pression en P est supérieure à la pression en T d'une valeur prédéfinie ; ces vannes 21a et 21b génèrent une perte de charge selon une loi Débit/Pression prédéfinie constituant la loi de dissipation du dispositif ; la puissance dissipée par la perte de charge ainsi générée est dissipée en chaleur essentiellement dans l'huile, provoquant sa dilatation ;
- un circuit de compensation thermique 30 assurant la mise en communication des chambres 13a et 13b du vérin 10 avec l'accumulateur oléopneumatique 12, afin de maitriser la dissipation d'énergie, et notamment l'élévation de pression provoquée par la dilatation de l'huile ; cette mise en communication pour chaque chambre se fait au travers d'un gicleur 23 de dimension contrôlée, en parallèle avec un clapet antiretour 24: ainsi, l'huile peut librement aller de l'accumulateur 12 vers la chambre correspondante par le clapet antiretour 24, mais le débit de cette chambre vers l'accumulateur est limité.

Un mouvement libre très lent de la tige 11 est souvent requis pour autoriser les dilatations thermiques de l'ouvrage, et ce sont les gicleurs 23 qui laissent passer ce débit de fuite autorisé. Le choix du gicleur résulte alors d'un compromis entre le débit de fuite devant circuler entre les deux chambres lors de la dissipation d'énergie sous l'effet d'un déplacement du vérin à une vitesse donnée, dite d'activation, et le débit autorisé de la chambre vers l'accumulateur, généré par la dilatation de l'huile dans la chambre, et qui influe sur la capacité de dissipation du dispositif.

Or, dans certains cas, lorsque l'on souhaite des vitesses d'activation très faibles associées à de très fortes capacité de dissipation, ce compromis est impossible à trouver, car les gicleurs autorisent un mouvement lent de la tige 11 sans mise en oeuvre d'un effort significatif.

Ainsi, un tel dispositif de dissipation ne convient pas aux applications où l'on souhaite interdire totalement les mouvements à basse vitesse de la tige tout en conservant une capacité de dissipation sous séisme.

Pour répondre à ce besoin, deux solutions sont disponibles aujourd'hui, qui présentent cependant leurs propres limitations.

La première repose sur l'utilisation d'un amortisseur visqueux précontraint (« Prestressed Viscous Damper »), qui ajoute en parallèle à l'amortissement une raideur précontrainte interdisant tout déplacement tant que cette valeur de précontrainte n'est pas dépassée. Toutefois, cela affecte fortement le comportement dynamique, et pour un effort maximal donné (qui sera imposé par la capacité de chargement de la structure, par exemple), la capacité de dissipation d'un tel dispositif est quasiment divisée par deux. En outre, un tel amortisseur peut présenter des limitations en courses maximales réalisables.

La deuxième solution, appliquée à des ouvrages où il est nécessaire de garantir un point fixe en condition normale et une dissipation sous séisme, consiste à combiner un dispositif d'amortissement classique avec un dispositif de fusible mécanique. Cette solution présente l'inconvénient de nécessiter une maintenance lourde après chaque déclenchement du dispositif de fusible mécanique.

### Exposé de l'invention

L'invention vise notamment à améliorer les dispositifs de dissipation d'énergie comportant un vérin à tige traversante dont les chambres sont reliées à un circuit hydraulique assurant la liaison avec un accumulateur permettant d'absorber une dilatation importante de l'huile en cas d'épisode sismique, afin de remédier en particulier aux inconvénients ci-dessus et autoriser des cas d'usages inaccessibles avec les conceptions de l'art antérieur.

Le document JP 4 389475, qui est considéré comme représentant l'art antérieur le plus proche, divulgue le préambule de la revendication 1.

### Résumé de l'invention

L'invention répond à ce besoin, selon un premier de ses aspects, grâce à un dispositif de dissipation hydraulique pour un bâtiment ou autre ouvrage de génie civil, comportant :
- Un cylindre,
- un piston mobile dans le cylindre sous l'effet d'un effort appliqué à l'amortisseur,
- une première et une deuxième chambre à l'intérieur du cylindre, séparées par le piston,
- un circuit de dissipation d'énergie relié aux chambres,
- un circuit de compensation thermique, comportant un accumulateur hydraulique et un circuit hydraulique reliant l'accumulateur à chacune des chambres et agencé pour faire communiquer la chambre ayant la pression la plus basse avec l'accumulateur tandis que l'autre chambre reste isolée de l'accumulateur.

De préférence, ce circuit de compensation thermique comporte au moins une vanne pilotée mécaniquement par un différentiel de pression entre les chambres du vérin pour, selon le sens de déplacement de la tige, isoler la chambre comprimée et ouvrir la chambre détendue, qui collecte le fluide qui s'est échauffé au passage du circuit de dissipation.

L'invention permet de réaliser la fonction de compensation thermique sans fuite permanente entre les chambres.

Cette disposition permet, notamment :
- De combiner dans un même dispositif, un comportement de type point fixe sous sollicitation courante et une dissipation visqueuse sous séisme ;
- d'optimiser la dissipation thermique, indépendamment de la loi de dissipation du dispositif.

Selon ce premier aspect de l'invention, pour un sens de déplacement donné de la tige, il n'y a toujours qu'une des deux chambres du vérin qui est mise en pression, à savoir la chambre comprimée. Cette chambre peut être isolée totalement de l'accumulateur, tandis que la chambre opposée, qui ne génère pas d'effort, est mise en communication avec l'accumulateur sans aucune restriction de débit.

Dans un exemple de mise en oeuvre de l'invention, le circuit hydraulique comporte un clapet-navette inversé soumis à la pression de pilotage des chambres, relié en entrée à celles-ci et en sortie à l'accumulateur, de telle sorte qu'en présence d'un différentiel de pression entre les chambres, le clapet-navette passe dans une position où il relie la chambre de plus faible pression à l'accumulateur. Le dispositif peut comporter en outre deux clapets anti-retour, chacun entre l'accumulateur et une chambre correspondante, ce clapet s'ouvrant dans le sens d'une circulation de l'accumulateur vers ladite chambre.

Dans une variante de mise en oeuvre de l'invention, le circuit hydraulique comporte une paire de vannes d'équilibrage à ratio unitaire croisées, chaque vanne d'équilibrage étant reliée en entrée à une chambre respective et en sortie à l'accumulateur, et étant pilotée par la pression de l'autre chambre, de telle sorte qu'en présence d'un différentiel de pression entre les chambres, la vanne reliée à la chambre de plus faible pression s'ouvre sous l'effet de la pression de pilotage de l'autre chambre, et la vanne reliée à la chambre de plus forte pression reste fermée.

De préférence, chaque vanne d'équilibrage intègre un clapet anti-retour s'ouvrant dans le sens de la sortie vers l'entrée.

De manière générale, le dispositif comporte avantageusement une vanne de bypass permettant de relier les chambres lorsqu'ouverte, afin de régler la position du piston.

De préférence, le circuit de dissipation comporte des vannes de limitation de pression ne s'ouvrant que lorsque la pression en entrée est supérieure à la pression de sortie d'une valeur prédéfinie.

On voit que l'invention, selon son premier aspect, permet de réaliser un dispositif à « fusible hydraulique », qui tant que l'effort appliqué reste inférieur à un seuil de déclenchement, se comporte comme une butée mécanique, n'autorisant qu'une légère déformation élastique, et qui, lorsque l'effort appliqué dépasse le seuil de déclenchement, se comporte en amortisseur pur, c'est-à-dire déployant un effort ne dépendant que de sa vitesse de déplacement, et non de sa position.

Un inconvénient d'un tel dispositif est qu'après un épisode sismique, lorsque les efforts exercés redescendent sous le seuil de déclenchement, la tige reste bloquée dans une position aléatoire dépendant de l'historique de déplacement, et il faut prévoir une action de recentrage (réglage) de l'ouvrage équipé.

Pour remédier à cet inconvénient, le cylindre présente avantageusement au moins deux orifices disposés de part et d'autre d'un plan médian du piston lorsque celui-ci est dans une position centrée, chaque orifice débouchant dans une chambre quand le piston est en position centrée ou après une faible course de déplacement du piston et étant relié à la chambre opposée par un clapet anti-retour, ce clapet anti-retour s'ouvrant dans le sens d'une circulation de fluide de l'orifice vers la chambre opposée, les orifices étant disposés relativement à la position centrée du piston de telle sorte que le déplacement du piston dans une direction donnée à partir de la position centrée ferme l'un des orifices et laisse l'autre orifice ouvert, le clapet anti-retour relié à cet orifice restant ouvert permettant le déplacement du piston dans la direction opposée, les deux orifices se retrouvant ouverts d'un même côté du piston lorsque la course de ce dernier excède une valeur prédéfinie. Chaque clapet antiretour est de préférence associé à un limiteur de débit. De préférence, en position centrée, chaque orifice débouche dans une chambre correspondante. Chaque orifice peut être partiellement obturé par le piston en position centrée. Par « plan médian du piston », il faut comprendre un plan médian orienté perpendiculairement à l'axe du cylindre dans lequel le piston coulisse.

On réalise de cette façon des circuits de bypass permettant de définir une position verrouillée stable, ce qui offre deux avantages majeurs :
- Aucun recentrage n'est nécessaire, ou bien le recentrage est facilité, après un épisode sismique ;
- la fiabilité générale est accrue, le dispositif évitant tout phénomène de dérive possible, inhérente, sur le long terme, à un dispositif de fusible hydraulique.

L'invention a encore pour objet l'utilisation d'un dispositif tel que défini plus haut comme dispositif parasismique ou pour participer à la dissipation d'énergie dans le cas de sollicitations sismiques.

L'invention a encore pour objet, selon un deuxième de ses aspects, indépendamment de la manière de réaliser le circuit de compensation thermique, et en particulier indépendamment de la réalisation de la fonction de « fusible hydraulique », un dispositif de dissipation hydraulique pour un bâtiment ou autre ouvrage de génie civil, comportant :
- Un cylindre,
- un piston mobile dans le cylindre sous l'effet d'un effort appliqué à l'amortisseur,
- une première et une deuxième chambre à l'intérieur du cylindre, séparées par le piston,
- un circuit de dissipation d'énergie relié aux chambres,
- un circuit de compensation thermique, comportant un accumulateur hydraulique et un circuit hydraulique reliant l'accumulateur à chacune des chambres,
- le cylindre présentant au moins deux orifices disposés de part et d'autre d'un plan médian du piston lorsque celui-ci est dans une position centrée, chaque orifice débouchant dans une chambre quand le piston est en position centrée ou après une faible course de déplacement du piston et étant relié à la chambre opposée par un clapet anti-retour, ce clapet anti-retour s'ouvrant dans le sens d'une circulation de fluide de l'orifice vers la chambre opposée, les orifices étant disposés relativement à la position centrée du piston de telle sorte que le déplacement du piston dans une direction donnée à partir de la position centrée ferme l'un des orifices et laisse l'autre orifice ouvert, le clapet anti-retour relié à cet orifice restant ouvert permettant le déplacement du piston dans la direction opposée, les deux orifices se retrouvant ouverts d'un même côté du piston lorsque la course de ce dernier excède une valeur prédéfinie.

Chaque clapet anti-retour est de préférence associé à un limiteur de débit. De préférence, en position centrée du piston, les orifices sont non obturés par le piston, étant alors proches de celui-ci, ou mieux ne sont que partiellement obturés par le piston.

### Brève description des dessins

L'invention pourra être mieux comprise à la lecture de la description qui va suivre, d'exemples de mise en oeuvre non limitatifs de l'invention, et à l'examen du dessin annexé, sur lequel :
[Fig 1] la figure 1, précédemment décrite, représente de façon schématique et partielle un dispositif de dissipation selon l'art antérieur,
[Fig 2] la figure 2 représente de façon schématique et partielle un dispositif de dissipation selon un premier exemple de mise en oeuvre de l'invention,
[Fig 3] la figure 3 représente de façon schématique, en coupe longitudinale, un exemple de clapet navette,
[Fig 4] la figure 4 illustre le fonctionnement du dispositif de la figure 2,
[Fig 5] la figure 5 est une vue analogue à la figure 2 d'un dispositif de dissipation selon un deuxième exemple de mise en oeuvre de l'invention,
[Fig 6] la figure 6 représente isolément, en coupe longitudinale, un exemple de vanne d'équilibrage,
[Fig 7] la figure 7 illustre le fonctionnement du dispositif de la figure 5,
[Fig 8] la figure 8 représente un exemple d'évolution de la force appliquée au vérin en fonction du déplacement sous sollicitations courantes, lorsque l'on ne dépasse pas l'effort de déclenchement,
[Fig 9] la figure 9 illustre le fonctionnement sous sollicitation sismique,
[Fig 10] la figure 10 est une vue analogue à la figure 5 d'une variante de réalisation, et
[Fig 11] la figure 11 illustre le fonctionnement du dispositif de la figure 10.

### Description détaillée

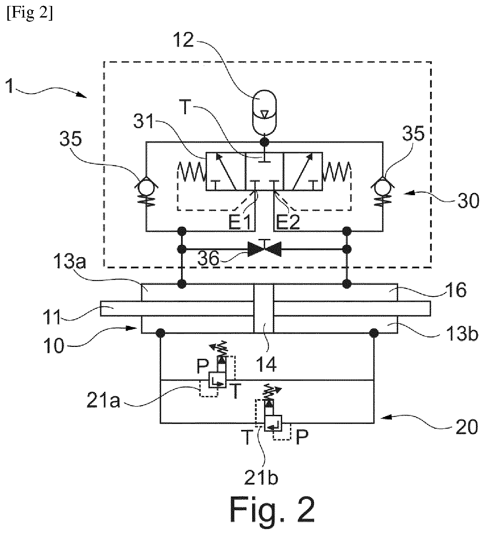

Le dispositif 1 selon le premier aspect de l'invention, représenté à la figure 2, comporte un vérin 10 comportant un cylindre 16 au sein duquel coulisse un piston 14 solidaire d'une tige 11.

Le piston 14 présente un segment d'étanchéité s'appliquant sur la surface intérieure du cylindre 16 et sépare deux chambres 13a et 13b à l'intérieur du cylindre 16. La tige 11 est reliée à des éléments de l'ouvrage (non représentés) dont on souhaite amortir le mouvement relatif en cas de sollicitation sismique.

Les chambres 13a et 13b sont reliées entre elles par un circuit de dissipation d'énergie 20 comportant des vannes 21a et 21b, connues en elles-mêmes, qui ne s'ouvrent que lorsque la pression P à l'entrée excède d'une valeur prédéterminée la pression T en sortie.

Lorsque les vannes 21a ou 21b s'ouvrent, elles créent une certaine perte de charge entre la chambre comprimée, dont le volume tend à diminuer sous l'effet du déplacement du piston 14, et la chambre détendue, dont le volume tend à augmenter.

L'énergie qui est dissipée accroît la température du fluide remplissant les chambres 13a et 13b.

Un circuit de compensation thermique, comportant un accumulateur 12 oléopneumatique, connu en lui-même, permet d'absorber la dilatation du fluide.

Dans l'exemple de la figure 2, le circuit de compensation thermique comporte un circuit hydraulique 30 qui permet d'assurer une mise en communication de la chambre détendue avec l'accumulateur 12, tout en isolant la chambre comprimée de l'accumulateur.

Ce circuit hydraulique 30 comporte un clapet-navette inversé 31, qui est une vanne trois voies ayant deux entrées E1 et E2 et une sortie T, étant configurée pour mettre en relation l'une des deux entrées avec la sortie selon la différence de pression existant entre les entrées. Pour un clapet-navette classique, c'est-à-dire non inversé, la sortie T est mise en relation avec l'entrée ayant la pression la plus élevée. Dans le cas du clapet-navette inversé, la sortie T est mise en relation avec l'entrée ayant la pression la plus faible.

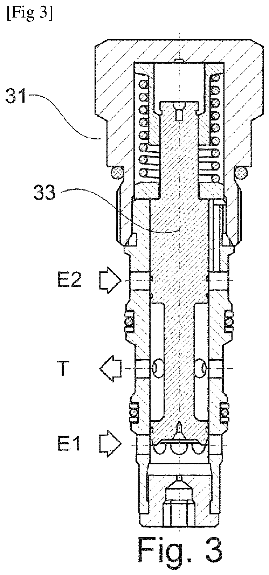

Comme illustré sur la figure 3, un clapet-navette connu en tant que tel peut comporter un tiroir piloté 33 à trois voies, ouvert sur la sortie T et normalement fermé sur les entrées en l'absence de différence de pression sur ces entrées E1 et E2. Les pressions des entrées E1 et E2 sont appliquées sur des surfaces opposées du tiroir 33.

L'accumulateur 12 est connecté au port de sortie T, et chacune des deux chambres 13a et 13b du vérin est directement connectée aux ports d'entrée E1 et E2.

Bien que le clapet-navette inversé permette le passage du fluide dans les deux sens, il est préférable de prévoir deux clapets anti-retour 35 permettant un passage libre de l'accumulateur 12 vers les chambres 13a et 13b, respectivement.

De préférence, comme illustré, le circuit hydraulique 30 comporte une vanne de réglage 36 permettant d'ouvrir manuellement un passage libre entre les chambres 13a et 13b pour pouvoir ajuster la position du vérin sans avoir à dépasser l'effort sous séisme.

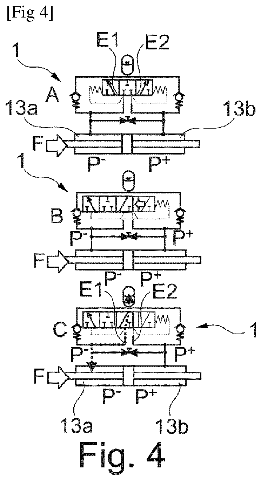

Le fonctionnement du dispositif 1 va maintenant être décrit en référence à la figure 4. Sur celle-ci, les vannes 21a et 21b n'ont pas été représentées, dans un souci de simplification.

Le schéma A de la figure 4 illustre l'application d'un effort (a fortiori un mouvement) au vérin. Cet effort génère un différentiel de pression p₊ - p₋ entre les chambres 13a et 13b. On suppose ici que la chambre 13b est la chambre comprimée, tandis que la chambre 13a est la chambre détendue.

Le schéma B illustre le déplacement du tiroir du clapet-navette inversé, sous l'effet du différentiel de pression appliqué à ses entrées.

Le schéma C illustre la mise en communication de la sortie T du clapet-navette inversé avec l'entrée E1 à la pression la plus faible sous l'effet de ce déplacement et de la commutation du clapet qui en résulte, tandis que l'autre entrée E2 est totalement isolée.

La chambre 13b comprimée étant close, il est possible d'interdire tout déplacement en l'absence de contrainte en deçà de la limite d'ouverture des vannes 21a et 21b, et de réaliser ainsi une fonction de bloqueur.

Néanmoins, la chambre détendue 13a étant directement connectée à l'accumulateur 12, on peut y dissiper la dilatation du fluide, y compris en autorisant des débits d'échange très importants qui n'auront aucun impact sur l'effort développé.

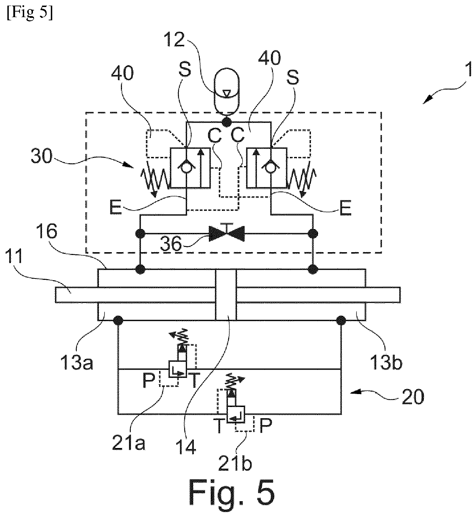

On va maintenant décrire en référence à la figure 5 un second mode de réalisation du dispositif 1, comportant un circuit hydraulique 30 reposant sur l'utilisation de vannes d'équilibrage 40 à ratio unitaire 1:1.

Une vanne d'équilibrage est une vanne pilotée à trois voies avec un port d'entrée E, un port de sortie S et un port de pilotage C. La circulation du fluide du port de sortie vers le port d'entrée est libre du fait de la présence d'un clapet anti-retour intégré, s'ouvrant dans le sens d'un écoulement allant de la sortie vers l'entrée.

Le passage de l'entrée vers la sortie n'est possible que si on applique au port de pilotage une pression supérieure à la pression en sortie augmentée d'une pression de pilotage ajustable.

Les vannes d'équilibrage sont associées à un ratio, qui s'applique à la pression de pilotage, permettant de faire commuter la vanne avec une fraction de la pression de sortie. Dans le cas présent, un ratio supérieur à l'unité est préjudiciable au bon fonctionnement du système, et l'on utilisera préférentiellement un ratio 1:1.

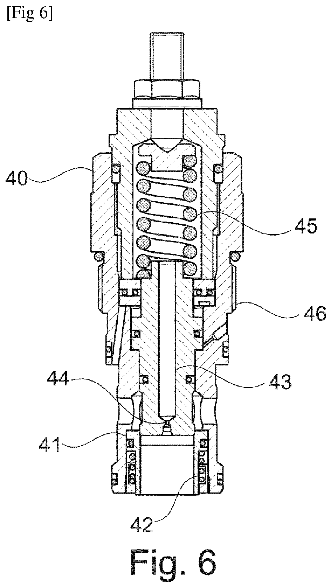

La figure 6 représente un exemple de vanne d'équilibrage, connu en soi.

Le siège du clapet principal 41 est mobile, précontraint par un ressort 42 ; il peut ainsi librement s'ouvrir dans le sens de la sortie vers l'entrée, comme requis par la fonction clapet anti-retour.

Le clapet principal 43 est équilibré par un orifice 44 permettant à la pression en entrée de s'appliquer de part et d'autre du clapet 43, sur une section équivalente : Ainsi la pression en entrée n'exerce aucun effort sur le clapet 43. Un ressort 45 à précharge réglable s'applique directement sur le clapet 43 et permet l'ajustement de la pression de pilotage.

Une section de pilotage 46, équilibrée entre la pression de sortie et la pression de pilotage, permet l'ouverture du clapet 43 lorsque l'effort généré par cette section de pilotage est supérieur à l'effort du ressort 45.

Le ratio de la vanne d'équilibrage est fixé par le rapport entre la section de pilotage 46 et la section principale du clapet 43. Pour un ratio 1:1, ces sections sont sensiblement les mêmes. Comme on peut le voir sur la figure 5, les deux vannes d'équilibrage 40 sont croisées, l'entrée de chacune de ces vannes 40 étant connectée à une chambre respective 13a ou 13b et la sortie étant connectée directement à l'accumulateur 12. Le port de pilotage de la vanne 40, dont l'entrée est reliée à la chambre 13a, est relié à la chambre 13b, et inversement.

La vanne de bypass manuelle 36 autorise, comme dans l'exemple précédent, une mise en position aisée du piston 14.

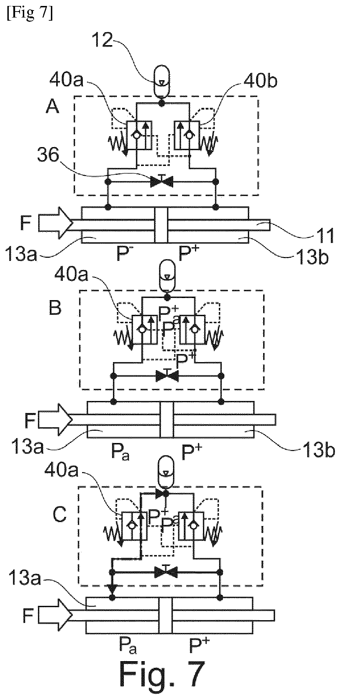

Le fonctionnement du dispositif 1 de la figure 5 va être décrit en référence à la figure 7. Sur cette figure, le schéma A illustre la création d'un différentiel de pression lorsqu'un effort F (a fortiori un mouvement) est imposé au vérin.

La pression de chaque chambre 13a ou 13b est alors appliquée à la vanne d'équilibrage 40 opposée :
- La pression sur le port de pilotage de la vanne 40b reliée en entrée à la chambre comprimée 13b est celle de la chambre détendue 13a; cette pression est donc inférieure ou égale à la pression de l'accumulateur 12, et la vanne 40b ne commute pas ;
- la pression sur le port de pilotage de la vanne 40a reliée en entrée à la chambre détendue 13a est celle de la chambre comprimée 13b ; elle est donc supérieure ou égale à la pression de l'accumulateur 12 et si la pression de la chambre comprimée 13b dépasse une pression de pilotage prédéfinie, la vanne 40a commute.

Le schéma C illustre l'état du dispositif 1 après commutation de la vanne 40a reliée en entrée à la chambre détendue 13a, pilotée par la pression de la chambre 13b comprimée opposée. Une liaison directe entre la chambre détendue 13a et l'accumulateur 12 est établie, permettant ainsi la régulation thermique.

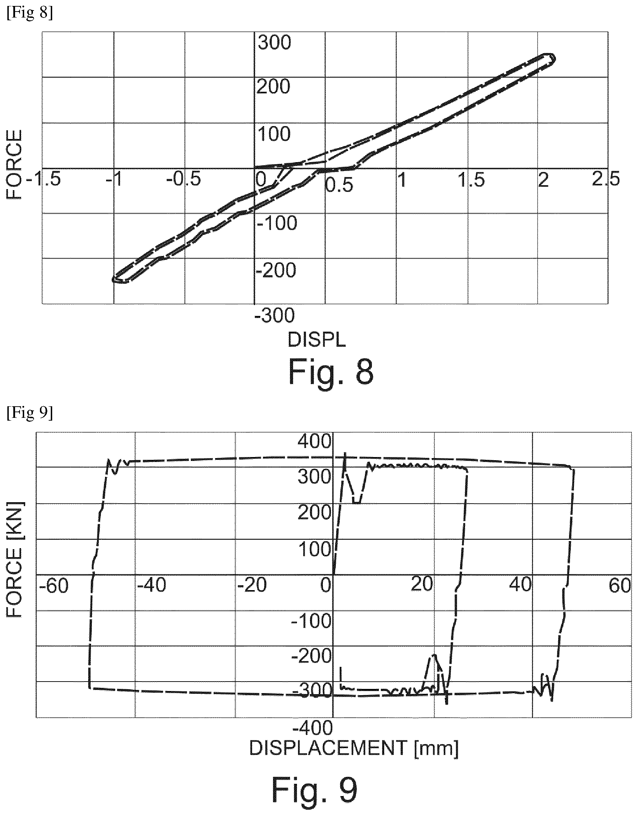

Les figures 8 et 9 illustrent le comportement d'un exemple de dispositif réalisé conformément à la figure 5. Sur ces figures, on a représenté l'effort exercé sur la tige en ordonnée et son déplacement en abscisse.

La courbe de la figure 8 illustre le fonctionnement, sous sollicitations courantes, c'est-à-dire lorsqu'on ne dépasse pas l'effort de déclenchement, par exemple 250kN, pour un déclenchement réglé à 300kN. On constate un déplacement très faible et élastique, c'est-à-dire réversible lorsque l'effort s'annule. On a bien un comportement de bloqueur.

La courbe de la figure 9 illustre le fonctionnement sous sollicitation sismique. On obtient un comportement purement dissipatif, sans aucun comportement élastique visible ou avec un comportement élastique marginal, tel qu'attendu pour un amortisseur standard.

On voit que l'invention, selon son premier aspect, permet de réaliser un dispositif à « fusible hydraulique », qui tant que l'effort appliqué reste inférieur à un seuil de déclenchement, se comporte comme une butée mécanique, n'autorisant qu'une légère déformation élastique, et qui, lorsque l'effort appliqué dépasse le seuil de déclenchement, se comporte en amortisseur pur, c'est-à-dire déployant un effort ne dépendant que de sa vitesse de déplacement, et non de sa position.

Un inconvénient du dispositif illustré à la figure 5 est qu'après un épisode sismique, lorsque les efforts exercés redescendent sous le seuil de déclenchement, la tige 11 reste bloquée dans une position aléatoire dépendant de l'historique de déplacement, et il faut prévoir une action de recentrage.

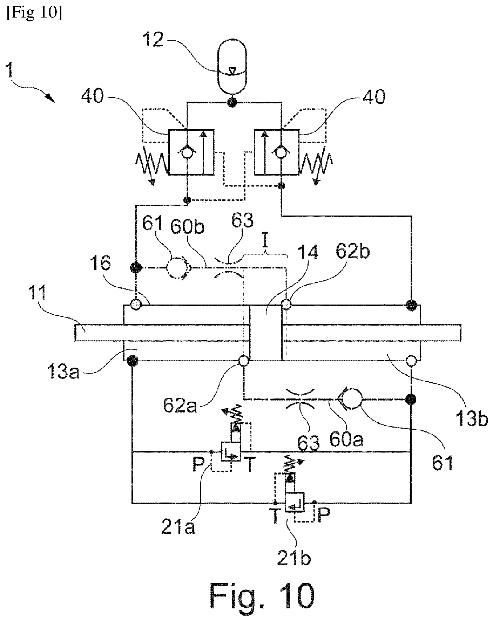

La variante illustrée à la figure 10 permet un recentrage automatique, sans perturber outre mesure la fonction « fusible hydraulique » du dispositif, et sans modifier ses performances de dissipation.

Le dispositif 1 de la figure 10 diffère de celui de la figure 5 par l'ajout de deux circuits de bypass 60a et 60b équipés chacun d'un clapet anti-retour 61, entre les chambres 13a et 13b du vérin 10.

Ces circuits 60a et 60b communiquent avec des entrées respectives 62a et 62b formées par des orifices débouchant radialement à l'intérieur du cylindre 16 à une position axiale définissant la position de centrage souhaitée I du piston 14. Lorsque le piston 14 est dans cette position I, les entrées 62a et 62b sont de préférence non obturées par le segment d'étanchéité du piston 14.

Chaque circuit de bypass comporte de préférence un gicleur 63 en série avec le clapet antiretour 61, permettant d'ajuster les débits de recentrage autorisés. Le débit permis par ce gicleur est suffisamment faible pour ne pas avoir d'impact significatif sur le comportement sous séisme.

Le circuit de bypass 60a permet une circulation de fluide de la chambre 13a vers la chambre 13b tant que l'entrée 62a n'est pas obturée par le segment d'étanchéité du piston 14 ou dépassée par le piston 14 de manière à ce que les deux entrées communiquent avec la même chambre.

De façon similaire, le circuit de bypass 60b permet une circulation de fluide de la chambre 13b vers la chambre 13a tant que l'entrée 62b n'est pas obturée par le segment d'étanchéité du piston 14.

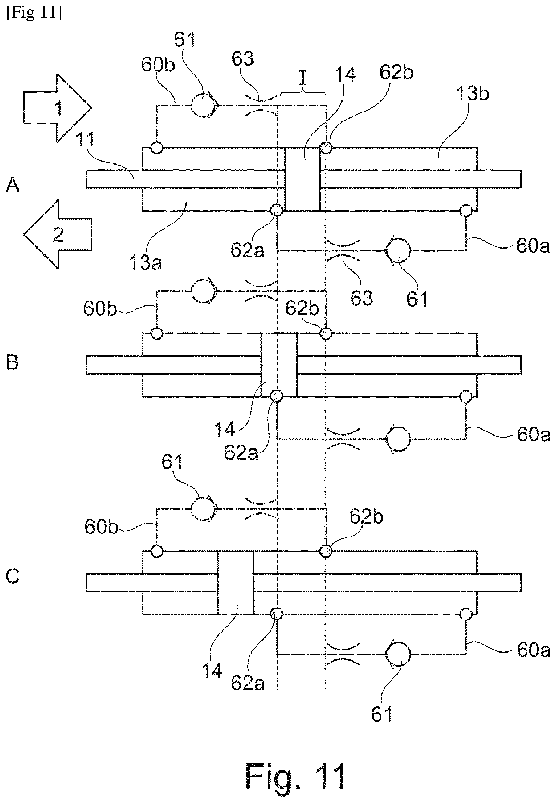

La figure 11 illustre le fonctionnement des circuits 60a et 60b assurant le recentrage automatique. Seuls ont été représentés sur cette figure ces circuits de bypass, le fonctionnement des circuits de dissipation d'énergie et de compensation thermique ayant déjà été décrit ci-dessus.

Sur le schéma A, on voit que lorsque le piston 14 est dans la zone de centrage I les entrées 62a et 62b sont de préférence presqu'obturées, de telle sorte qu'un faible déplacement axial du piston suffit à obturer l'une ou l'autre de ces entrées.

Sous l'effet d'un léger déplacement du piston 14 dans la direction de la flèche 2, comme illustré par le schéma B, l'entrée 62a est obturée, rendant le circuit de bypass 60a non opérationnel. Le déplacement du piston 14 est bloqué par la fonction de fusible hydraulique du dispositif, décrite plus haut. L'autre circuit de bypass 60b ne permet qu'un mouvement lent de recentrage du piston 14 dans la direction opposée, donnée par la flèche 1, en raison de la présente du clapet anti-retour 61.

Lorsque l'amplitude du mouvement du piston 14 dans la direction de la flèche 2 est plus grande, par exemple en raison de la survenance d'un évènement sismique, comme illustré par le schéma C, le piston 14 franchit l'entrée 62a et cette dernière se retrouve avec l'entrée 62b du même côté du piston 14. Dans cette configuration, les deux circuits de bypass 60a et 60b restent fermés tant que le piston se déplace dans la direction de la flèche 2. Néanmoins, le circuit de bypass 60b permet un mouvement inverse lent, de recentrage dans la direction de la flèche 1, grâce à l'ouverture du clapet 61.

Bien entendu, l'invention n'est pas limitée aux exemples qui viennent d'être décrits. Par exemple, la fonction de fusible hydraulique peut être réalisée avec un circuit actif comportant des vannes électromécaniques pilotées électriquement, en réponse à une mesure des pressions des chambres du vérin. Toutefois, un circuit passif est préférable pour un système de recentrage après séisme, situation dans laquelle on ne peut garantir la fonctionnalité des sources d'énergie.

Dans une variante, les entrées 62a et 62b sont obturées en position centrée du piston 14.

## Revendications

1. Dispositif (1) de dissipation hydraulique pour un bâtiment ou autre ouvrage de génie civil, comportant :
- un cylindre (16),
- un piston (14) mobile dans le cylindre sous l'effet d'un effort appliqué à l'amortisseur,
- une première (13a) et une deuxième chambre (13b) à l'intérieur du cylindre, séparées par le piston (14),
- un circuit de dissipation d'énergie (20) relié aux chambres,
- un circuit de compensation thermique, comportant un accumulateur hydraulique (12) et un circuit hydraulique (30) reliant l'accumulateur à chacune des chambres,
**caractérisé en ce que** le circuit hydraulique (30) est agencé pour faire communiquer la chambre ayant la pression la plus basse avec l'accumulateur tandis que l'autre chambre reste isolée de l'accumulateur.

2. Dispositif selon la revendication 1, le circuit hydraulique (30) comportant un clapet-navette inversé (31) soumis à la pression de pilotage des chambres, relié en entrée à celles-ci et en sortie à l'accumulateur, de telle sorte qu'en présence d'un différentiel de pression entre les chambres, le clapet navette passe dans une position où il relie la chambre de plus faible pression à l'accumulateur.

3. Dispositif selon la revendication 2, comportant en outre deux clapets antiretour (35) chacun entre l'accumulateur (12) et une chambre correspondante (13a ; 13b), ce clapet s'ouvrant dans le sens d'une circulation de l'accumulateur vers ladite chambre.

4. Amortisseur selon la revendication 1, le circuit hydraulique (30) comportant une paire de vannes d'équilibrage à ratio unitaire (40) croisées, chaque vanne étant reliée en entrée à une chambre respective et en sortie à l'accumulateur, et étant pilotée par la pression de l'autre chambre, de telle sorte qu'en présence d'un différentiel de pression entre les chambres, la vanne reliée à la chambre de plus faible pression s'ouvre sous l'effet de la pression de pilotage de l'autre chambre, et la vanne reliée à la chambre de plus forte pression reste fermée.

5. Dispositif selon la revendication 4, chaque vanne (40) intégrant un clapet anti-retour s'ouvrant dans le sens de la sortie vers l'entrée.

6. Dispositif selon l'une quelconque des revendications précédentes, comportant une vanne de bypass (36) permettant de relier les chambres (13a, 13b) lorsqu'ouverte, afin de régler la position du piston.

7. Dispositif selon l'une quelconque des revendications précédentes, le circuit de dissipation comportant des vannes de limitation de pression (21a, 21b) ne s'ouvrant que lorsque la pression en entrée est supérieure à la pression de sortie d'une valeur prédéfinie.

8. Dispositif selon l'une quelconque des revendications précédentes, le cylindre (16) présentant au moins deux orifices (62a, 62b) disposés de part et d'autre d'un plan médian du piston (14) lorsque celui-ci est dans une position centrée, chaque orifice débouchant dans une chambre quand le piston est en position centrée ou après une faible course de déplacement du piston et étant relié à la chambre opposée par un clapet anti-retour (61), ce clapet anti-retour s'ouvrant dans le sens d'une circulation de fluide de l'orifice (62a ; 62b) vers la chambre opposée, les orifices étant disposés relativement à la position centrée du piston de telle sorte que le déplacement du piston dans une direction donnée à partir de la position centrée ferme l'un des orifices et laisse l'autre orifice ouvert, les deux orifices se retrouvant ouverts d'un même côté du piston lorsque la course de ce dernier excède une valeur prédéfinie.

9. Dispositif selon la revendication 8, chaque clapet anti-retour (61) étant associé à un limiteur de débit (63).

10. Utilisation d'un dispositif (1) tel que défini dans l'une quelconque des revendications précédentes comme dispositif parasismique ou pour participer à la dissipation d'énergie dans le cas de sollicitations sismiques.

## Patentansprüche

1. Vorrichtung (1) zur hydraulischen Energieableitung für ein Gebäude oder anderes Bauwerk, welche aufweist:
- einen Zylinder (16),
- einen Kolben (14), der in dem Zylinder unter der Wirkung einer auf den Dämpfer ausgeübten Kraft beweglich ist,
- eine erste (13a) und eine zweite Kammer (13b) im Inneren des Zylinders, die durch den Kolben (14) getrennt sind,
- einen Energieableitungskreis (20), der mit den Kammern verbunden ist,
- einen Temperaturkompensationskreis, der einen Hydrospeicher (12) und einen Hydraulikkreis (30), der den Speicher mit jeder der Kammern verbindet, aufweist, **dadurch gekennzeichnet, dass** der Hydraulikkreis (30) dazu eingerichtet ist, die Kammer mit dem niedrigsten Druck mit dem Speicher in Verbindung zu bringen, während die andere Kammer vom Speicher isoliert bleibt.

2. Vorrichtung nach Anspruch 1, wobei der Hydraulikkreis (30) ein Umkehr-Wechselventil (31) aufweist, auf das der Steuerdruck der Kammern einwirkt und das am Eingang mit diesen und am Ausgang mit dem Speicher verbunden ist, derart, dass bei Vorhandensein einer Druckdifferenz zwischen den Kammern das Wechselventil in eine Position übergeht, in der es die Kammer mit dem niedrigeren Druck mit dem Speicher verbindet.

3. Vorrichtung nach Anspruch 2, welche außerdem zwei Rückschlagventile (35) aufweist, die sich jeweils zwischen dem Speicher (12) und einer entsprechenden Kammer (13a; 13b) befinden, wobei sich dieses Ventil in der Richtung eines Flusses vom Speicher zur Kammer öffnet.

4. Dämpfer nach Anspruch 1, wobei der Hydraulikkreis (30) ein Paar gekreuzte Ausgleichsventile mit Einheitsverhältnis (40) aufweist, wobei jedes Ventil am Eingang mit einer jeweiligen Kammer und am Ausgang mit dem Speicher verbunden ist und durch den Druck der anderen Kammer gesteuert wird, derart, dass bei Vorhandensein einer Druckdifferenz zwischen den Kammern das Ventil, das mit der Kammer mit dem niedrigeren Druck verbunden ist, sich unter der Einwirkung des Steuerdrucks der anderen Kammer öffnet und das Ventil, das mit der Kammer mit dem höheren Druck verbunden ist, geschlossen bleibt.

5. Vorrichtung nach Anspruch 4, wobei in jedes Ventil (40) ein Rückschlagventil integriert ist, das sich in der Richtung vom Ausgang zum Eingang öffnet.

6. Vorrichtung nach einem der vorhergehenden Ansprüche, welche ein Umgehungsventil (36) aufweist, das es ermöglicht, die Kammern (13a, 13b) zu verbinden, wenn es offen ist, um die Position des Kolbens einzustellen.

7. Vorrichtung nach einem der vorhergehenden Ansprüche, wobei der Ableitungskreis Druckbegrenzungsventile (21a, 21b) aufweist, die sich nur öffnen, wenn der Druck am Eingang um einen vordefinierten Wert höher als der Druck am Ausgang ist.

8. Vorrichtung nach einem der vorhergehenden Ansprüche, wobei der Zylinder (16) mindestens zwei Öffnungen (62a, 62b) aufweist, die beiderseits einer Mittelebene des Kolbens (14) angeordnet sind, wenn dieser sich in einer zentrierten Position befindet, wobei jede Öffnung in eine Kammer mündet, wenn sich der Kolben in zentrierter Position befindet, oder nach einem kurzen Verschiebeweg des Kolbens, und mit der gegenüberliegenden Kammer durch ein Rückschlagventil (61) verbunden ist, wobei sich dieses Rückschlagventil in der Richtung eines Fluidflusses von der Öffnung (62a; 62b) zur gegenüberliegenden Kammer öffnet, wobei die Öffnungen relativ zur zentrierten Position des Kolbens derart angeordnet sind, dass die Verschiebung des Kolbens aus der zentrierten Position in einer gegebenen Richtung eine der Öffnungen schließt und die andere Öffnung offen lässt, wobei die zwei Öffnungen sich offen auf derselben Seite des Kolbens befinden, wenn der Hub dieses Letzteren einen vordefinierten Wert überschreitet.

9. Vorrichtung nach Anspruch 8, wobei jedes Rückschlagventil (61) einem Durchflussbegrenzer (63) zugeordnet ist.

10. Verwendung einer Vorrichtung (1), wie in einem der vorhergehenden Ansprüche definiert, als paraseismische Vorrichtung oder zur Beteiligung an der Energieableitung im Falle von seismischen Beanspruchungen.

## Claims

1. Hydraulic dissipation device (1) for a building or other civil engineering structure, having:
- a cylinder (16),
- a piston (14) that is able to move in the cylinder under the effect of a force applied to the damper,
- a first (13a) and a second chamber (13b) inside the cylinder, which are separated by the piston (14),
- an energy dissipation circuit (20) connected to the chambers,
- a thermal compensation circuit, having a hydraulic accumulator (12) and a hydraulic circuit (30) connecting the accumulator to each of the chambers, **characterized in that** the hydraulic circuit (30) is arranged to make the chamber having the lowest pressure communicate with the accumulator while the other chamber remains isolated from the accumulator.

2. Device according to Claim 1, the hydraulic circuit (30) having an inverted shuttle valve (31) subjected to the pilot pressure of the chambers, which is connected at the inlet to the chambers and at the outlet to the accumulator, such that in the presence of a pressure differential between the chambers, the shuttle valve passes into a position in which it connects the chamber of lower pressure to the accumulator.

3. Device according to Claim 2, also comprising two non-return valves (35) that are each between the accumulator (12) and a corresponding chamber (13a; 13b), this valve opening in the direction of circulation from the accumulator towards said chamber.

4. Damper according to Claim 1, the hydraulic circuit (30) having a pair of balancing valves with unit ratio (40) that are crossed, each valve being connected at the inlet to a respective chamber and at the outlet to the accumulator, and being pilot-operated by the pressure of the other chamber, such that in the presence of a pressure differential between the chambers, the valve connected to the chamber of lower pressure opens under the effect of the pilot pressure of the other chamber, and the valve connected to the chamber of higher pressure remains closed.

5. Device according to Claim 4, each valve (40) integrating a non-return valve opening in the direction from the outlet towards the inlet.

6. Device according to any one of the preceding claims, having a bypass valve (36) making it possible to connect the chambers (13a, 13b) when open, in order to adjust the position of the piston.

7. Device according to any one of the preceding claims, the dissipation circuit having pressure-limiting valves (21a, 21b) opening only when the pressure at the inlet is greater than the outlet pressure by a predetermined value.

8. Device according to any one of the preceding claims, the cylinder (16) having at least two orifices (62a, 62b) disposed on either side of a median plane of the piston (14) when the piston is in a centred position, each orifice emerging into a chamber when the piston is in the centred position or after a small movement travel of the piston and being connected to the opposite chamber by a non-return valve (61), this non-return valve opening in the direction of circulation of fluid from the orifice (62a; 62b) towards the opposite chamber, the orifices being disposed relative to the centred position of the piston such that the movement of the piston in a given direction from the centred position closes one of the orifices and leaves the other orifice open, the two orifices being open on one and the same side of the piston when the travel of the latter exceeds a predefined value.

9. Device according to Claim 8, each non-return valve (61) being associated with a flow limiter (63).

10. Use of a device (1) as defined in any one of the preceding claims as an earthquake-resistant device or for participating in the dissipation of energy in the event of seismic stresses.
